# EUROPEAN PATENT SPECIFICATION

(11) **EP 1 728 575 B1**
(45) Date of publication and mention of the grant of the patent: **19.04.2017**
(21) Application number: 05727287.4
(22) Date of filing: 25.03.2005
(51) Int. Cl.: B23D 5/02, B23D 13/04, B23B 5/16, B23H 9/00, B23H 9/10

(54) **CUTTING METHOD AND CUTTING TOOL APPARATUS**
SCHNEIDVERFAHREN UND SCHNEIDWERKZEUGVORRICHTUNG
MÉTHODE DE COUPE ET DISPOSITIF D'OUTIL DE COUPE

(30) Priority: 26.03.2004 JP 2004093113
(43) Date of publication of application: 06.12.2006
(73) Proprietor: MAKINO MILLING MACHINE CO., LTD., Meguro-ku, Tokyo 152-8578 (JP)
(72) Inventor: KOSUGE, Ya., c/o MAKINO MILLING MACHINE CO., LTD., Meguro-ku, Tokyo 1528578 (JP); ISHIDA, Nobuya, c/o MAKINO MILLING MACHINE CO. LTD, Meguro-ku, Tokyo 1528578 (JP)
(74) Representative: Becker Kurig Straus
(86) International application number: PCT/JP2005/006421
(87) International publication number: WO 2005/092548

(56) References cited:
- WO-A1-89/08522
- GB-A- 1 526 485
- JP-A- 10 328 922
- JP-A- 56 126 515
- JP-A- 60 155 310
- JP-A- 2004 034 191
- JP-U- 59 109 410
- US-A- 2 217 659

## Description

### TECHNICAL FIELD

The present invention relates to a cutting method, a cutting apparatus and a cutting tool apparatus suitable for machining the rib portion of a workpiece.

### BACKGROUND ART

A die used for plastic molding or the like is typically cut by an end mill or a ball-end mill. A plastic molded product is often provided with a thin rib or ribs for reinforcement. The rib of the plastic molded product is typically formed as a thin tabular protrusion member having a taper. In the case where the molded product has a thin rib or ribs, the die portion corresponding to the rib is machined by electric discharge using a rib electrode. In the prior art, the rib electrode used for electric discharge machining is fabricated by cutting with a rotary cutting tool such as an end mill or a ball-end mill or by grinding with a grinding wheel.

A method of cutting a workpiece with a non-rotary cutting tool such as a spring-necked turning tool is disclosed in Japanese Patent Publication No. 6-61651. In this machining method, a groove of a rubber die or the like, which is difficult to machine with a rotary cutting tool, is cut using a formed spring-necked turning tool. Also, a device for mounting a rib electrode, for electric discharge machining, on a holder at a position is disclosed in Japanese Unexamined Patent Publication No. 2002-52422 . The rib electrode is mounted on this holder at a position by engaging it vertically and horizontally with the holder.

Recently, demand has increased for reducing the weight of industrial products in general, and the rib of plastic molded product is also required to be reduced in thickness. To reduce the rib thickness, the rib electrode used for electric discharge machining of the die is also required to be reduced in thickness. In the case where a thin rib electrode is generated by cutting each side thereof at a time with a rotary cutting tool such as an end mill or a ball-end mill, the deflection or vibration of the rib portion of the workpiece results in a poor machining accuracy and makes the machining difficult. Especially, when a rib electrode having a very high aspect ratio, i.e. the ratio of height to thickness of the rib, is cut with an end mill or a ball-end mill, the resulting deflection or vibration leads to the problem that the cutting load cannot be imposed and the required cutting accuracy is not attained. Also, it is difficult to machine a thin tabular rib electrode for electric charge machining with high accuracy and mount it accurately on an electrode holder. This poses a problem that considerable time is required for the machining and mounting job.
WO8908522A1 discloses a method for machining scroll components wherein outer and inner involute surfaces of a rib are machined by two tools. The tools are simultaneously traversed in the spiral direction of the scroll for about 540 degrees around center of base circular end plate between radial lines, while they are fed separately between radial lines. The tools are single point cutting tools, wherein the cutting edges are formed only at the distal ends of the tools, so that upon machining the lower portions of inner and outer involute surfaces of the rib, the upper portions of the surfaces adjacent the top of the rib do not contact the cutting edges of the tools.
US2217659A refers to a broach for making grooves in a body. The broach includes cutting edges which are defined in base members. The broach is secured to stock which is connected to a press machine for exerting a pressure on the broach in a vertical direction so as to force cutting edges of the broach into a collar whereby shoulders are removed from the collar. The cutting edges are provided only at the ends of base members of the broach, so that the cutting edge does not continuously contact the collar entirely from the root portion to the top portion of the collar.
JPS56126515A discloses a burr removing apparatus which makes use of a radial surface cutter and a circumferential surface cutter. The apparatus includes an end burr remover for removing welding burrs along end faces of an annular flange, and a side burr remover for removing welding burrs along the outer and inner side surfaces of the annular flange. The end burr remover includes a tool defining a straight cutting edge at the end thereof. The side burr remover includes tools each defining an arcuate cutting edge at the end thereof.
GB1526485A relates to a method for forming a groove in a workpiece by sparking from a ribbed electrode during rotation of the bods and electrode about parallel axes and changing the electrode shape as erosion of the workpiece proceeds to produce a increased width and depth of the groove.

### DISCLOSURE OF THE INVENTION

The present invention is intended to solve these problems of the prior art, and an object of the present invention is to provide a cutting method, a cutting apparatus, and a cutting tool apparatus capable of cutting a rib portion of a workpiece efficiently and accurately.

In order to achieve the object described above, according to the present invention, there is provided a method for cutting a rib portion of a workpiece, a cutting tool apparatus mounted on a machine tool and a cutting apparatus for cutting a rib portion of a workpiece as specified in the appended claims.

### BRIEF DESCRIPTION OF THE DRAWINGS

Figs. 1A to C are diagrams showing a cutting method and a cutting tool apparatus according to a first embodiment of the present invention, in which Fig. 1A is a front view showing the cutting operation as viewed from the front of the cutting tool apparatus, Fig. 1B is a side view of the cutting tool apparatus of Fig. 1A as viewed from a direction indicated by arrow IB, and Fig. 1C is a sectional view of the cutting tool apparatus taken along line IC-IC of Fig. 1A as viewed from a direction indicated by arrow IC.
Figs. 2A to C are diagrams showing a cutting tool apparatus according to a second embodiment of the present invention, in which Fig. 2A is a front view showing the cutting tool apparatus as viewed from the front of the blades, Fig. 2B is a side view of the cutting tool apparatus of Fig. 2A as viewed from a direction indicated by arrow IIB, and Fig. 2C is a sectional view of the cutting tool apparatus taken along line IIC-IIC of Fig. 2A as viewed from a direction indicated by arrow IIC.
Fig. 3 is a perspective view showing a cutting apparatus according to an embodiment of the present invention.
Fig. 4 is a perspective view of a workpiece including a rib portion curved in an S-shape.
Fig. 5 is a perspective view of a rib electrode for electric discharge machining having two rib portions erected in parallel.

### BEST MODE FOR CARRYING OUT THE INVENTION

Preferred embodiments of the present invention will be described below with reference to the accompanying drawings.

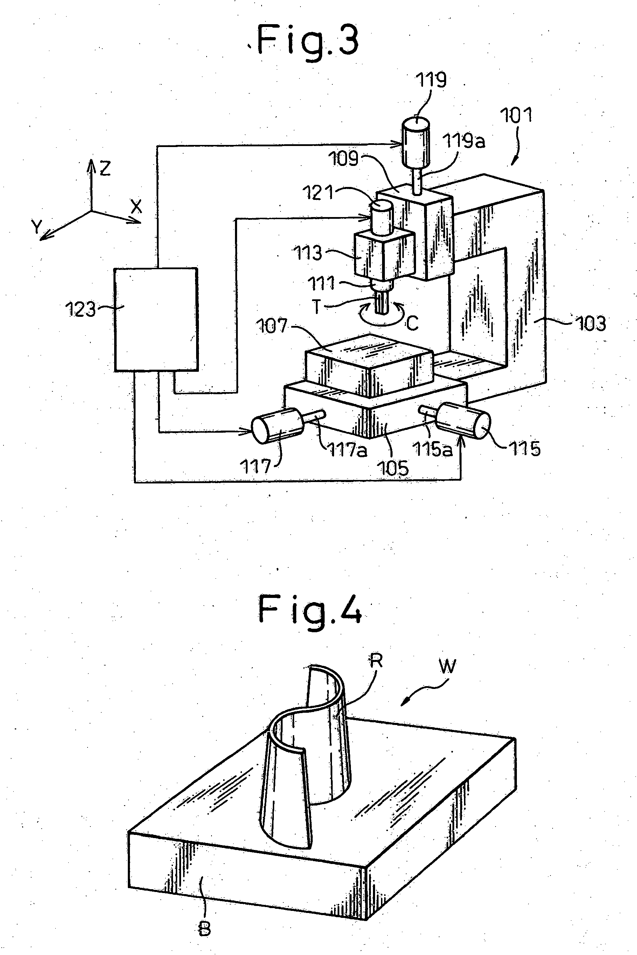

First, a cutting apparatus according to an embodiment of the present invention will be described with reference to Fig. 3. The cutting apparatus 101 includes, as main components, a column 103, an X-Y feed mechanism 105 located on the front side of the lower portion of the column 103, a table 107 located on the X-Y feed mechanism 105 for fixing a workpiece, a Z-axis feed mechanism 109 located on the front side of the upper portion of the column 103, and a spindle head 113 mounted on the Z-axis feed mechanism 109 for rotatably supporting a spindle 111.

The X-Y feed mechanism 105 includes X-axis and Y-axis feed shafts 115a, 117a constituted by ball screws extending in directions along X-axis and Y-axis orthogonal to each other in a horizontal plane, nuts (not shown) located on a lower surface of a table 107 and adapted to engage with the X-axis and Y-axis feed shafts 115a, 117a, and X-axis and Y-axis feed motors 115, 117 constituted by servo motors coupled to one end of each of the X-axis and Y-axis feed shafts 115a, 117a. The Z-axis feed mechanism 109 includes a Z-axis feed shaft 119a constituted by a ball screw extending in a direction along Z-axis orthogonal to X- and Y-axes, a nut (not shown) located on the spindle head 113 and adapted to engage with the Z-axis feed shaft 119a, and a Z-axis feed motor 119 constituted by a servo motor coupled to one end of the Z-axis feed shaft 119a.

The spindle 111 is supported on the spindle head 113 so as to be rotatable in a direction along C-axis about a center axis extending parallel to Z-axis. In this specification, a rotational feed axis about the center axis of the spindle 111 is defined as C-axis. The spindle 111 is supported on the spindle head 113 such that the forward or lower end thereof faces the table 107. The rear or upper end of the spindle 111 is coupled with the C-axis feed motor 121 constituted by a servo motor for controlling the C-axis rotational position of the spindle 111. At the forward end of the spindle 111, a tool fixing means (not shown) for mounting and fixing a cutting tool T described later is provided. The tool fixing means includes a tapered hole formed at the forward end of the spindle 111, and a draw bar for pulling the cutting tool T into the tapered hole. The tool fixing means may be constituted by a tool chuck device provided at the forward end of the spindle 111.

The X-axis, Y-axis and Z-axis feed motors 115, 117, 119 and the C-axis feed motor 121 are connected to a NC unit 123 of the machine tool 101. In accordance with machining program stored in the NC unit 123, the X-axis, Y-axis and Z-axis feed motors 115, 117, 119 and the C-axis feed motor 121 are controlled, so that the cutting tool T mounted on the spindle 111 and the workpiece fixed on the table 107 are moved relative to each other thereby to machine the workpiece to the desired shape.

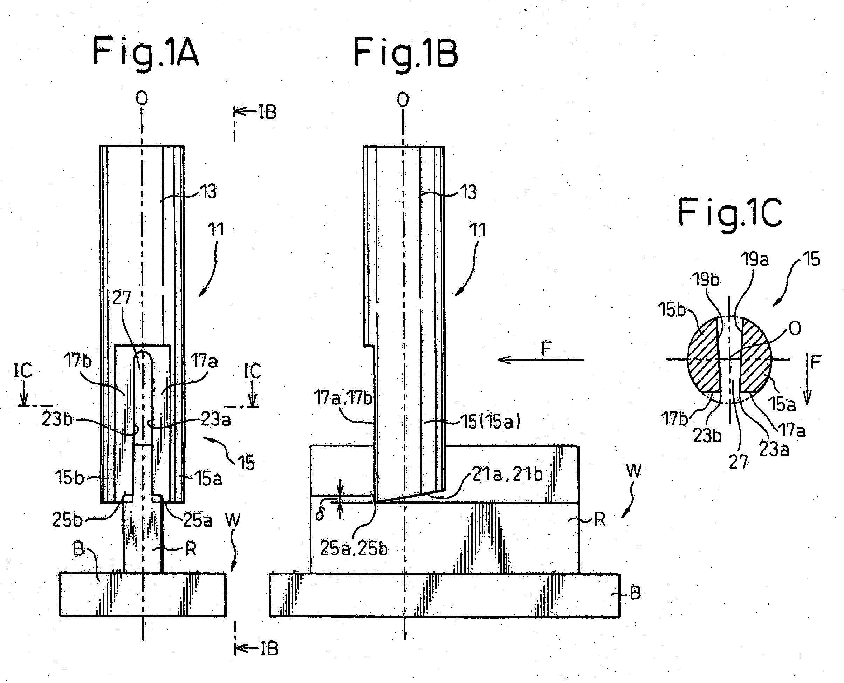

Next, with reference to Fig. 1A to 1C, a cutting tool apparatus according to a first embodiment of the present invention will be described. In Figs. 1A to 1C, a cutting tool 11 according to a first embodiment includes a shank portion 13 mounted at the forward end of the spindle 111 of the machine tool 101, and a cutting portion 15 located axially forward of the shank portion 13, i.e. in the lower part of Figs. 1A and 1B. In this embodiment, the shank portion 13 is formed of a column member or preferably a cylindrical member extending along the center axis O. The cutting tool 11 is mounted at the forward end of the spindle by fixing the shank portion 13 to the spindle 111 by means of the tool fixing means described above. In the process, the center axis O of the cutting tool 11 is preferably coincident with the center of the C-axis of the cutting apparatus 101.

In this embodiment, the cutting portion 15 has a fork-like shape so as to extend axially from the shank portion 13 with an axially extending slit 27 therebetween. The fork-like shape includes a pair of arms 15a, 15b, which are formed with rake faces 17a, 17b formed by cutting off in the same plane parallel to the center axis O of the cutting tool 11. These rake faces may be formed at an appropriate rake angle. In this specification, a face including the rake faces 17a, 17b is defined as a front face of the cutting tool 11. The cutting tool 11 is moved in a direction indicated by arrow F shown in Fig. 1B thereby to cut the rib portion R of the workpiece W. As shown in Fig. 1B, the rake faces 17a, 17b are formed at a position shifted forward of the center axis O. However, the rake faces 17a, 17b are more preferably formed at a position coincident with the center axis O, because the rotational position of the spindle around the C-axis can be controlled more easily.

Referring to Fig. 1C, first flanks 19a, 19b diverging progressively rearward from the rake faces 17a, 17b by the slit 27 are formed on the inner surfaces of the arms 15a, 15b, respectively. The rake faces 17a, 17b and the first flanks 19a, 19b form first cutting edges 23a, 23b on the arms 15a, 15b, respectively. The first cutting edges 23a, 23b extend linearly in parallel to each other or extend linearly or curvedly in such a manner as to gradually diverge from the base end side toward the forward end side, i.e. from the shank portion 13 side toward the forward end of the arms 15a, 15b along the center axis O. The first cutting edges 23a, 23b are formed in a fork-like shape in opposed relation to each other.

Further, referring to Figs. 1A an 1B, the forward ends of the arms 15a, 15b are formed with second flanks 21 a, 21 b, respectively. The rake faces 17a, 17b and the second flanks 21a, 21b form the second cutting edges 25a, 25b at the forward ends of the arms 15a, 15b, respectively. In this embodiment, the second cutting edges 25a, 25b extend along the same straight line perpendicular to the center axis O as viewed from the front side of the cutting tool 11.

On the other hand, in Figs. 1A and 1B, the workpiece W includes a tabular base portion B fixed directly or indirectly through a pallet on the table 107 of the machine tool 101, and a rib portion R formed of a thin plate linearly projected from the upper surface of the base portion B. The two opposed side surfaces of the rib portion R are roughly machined (pre-machined) by an end mill or a ball-end mill to substantially the same shape as the end product so as to extend in parallel or with a gradient progressively converging toward the forward end.

An operation of this embodiment and a cutting method according to the present invention will be described below. The shank portion 13 of the cutting tool 11 is mounted at the forward end of the spindle 111 of the cutting apparatus 101. When the cutting process is started, the cutting tool 11 is located at a machining start position, i.e. at the upper right corner of the rib portion R in Fig. 1B, by means of X-axis, Y-axis, and Z-axis feed mechanisms 105, 109 of the cutting apparatus 101. The first cutting edges 23a, 23b and the second cutting edges 25a, 25b of the cutting tool 11 engage the two side surfaces of the rib portion R. At the same time, the second cutting edges 25a, 25b engage with the side surfaces by a predetermined cut depth in the direction along Z-axis, and the cutting tool 11 is fed in a cutting direction F along a machining path extending in a longitudinal direction of the rib portion R. As a result, the two side surfaces of the rib portion R are cut thinly, and at one time, by the first cutting edges 23a, 23b. When the first cutting edges 23a, 23b and the second cutting edges 25a, 25b arrive at the left edge of the workpiece W, the cutting tool 11 is moved up along Z-axis and fed to the right edge of the workpiece W. Then, the cutting tool 11 is fed in the direction along Z-axis by the cut depth with respect to the machining surface previously machined, and then fed again in the cutting direction F. By repeating this process, the rib portion R of the workpiece W is cut little by little from the upper portion to the lower portion in Fig. 1B.

As described above, in this embodiment, the cutting tool 11 is arranged with respect to the workpiece W such that the first cutting edges 23a, 23b engage the two opposed side surfaces of the rib portion R. Then, the two side surfaces of the rib portion R are cut at one time by moving the cutting tool 11 relative to the workpiece W along the desired machining path (in this embodiment, along the linear or curved machining path extending in the longitudinal direction of the rib portion R). Thus, the two side surfaces of the rib portion R being cut are, as shown in Fig. 1A, supported in opposite directions by the two first cutting edges 23a, 23b of the cutting tool 11. Therefore, stable machining can be performed without deflecting or vibrating the rib portion R during the machining process. According to this cutting method, if the aspect ratio, i.e. the ratio of the rib height to the thickness of the forward end of the rib portion is 10 to 200, the rib portion can be machined. For example, even a workpiece of graphite having a thickness of 1 mm at the forward end of the rib, a rib height of 100 mm, a rib length of 80 mm and an aspect ratio of 100 can be machined with high efficiency and high accuracy.

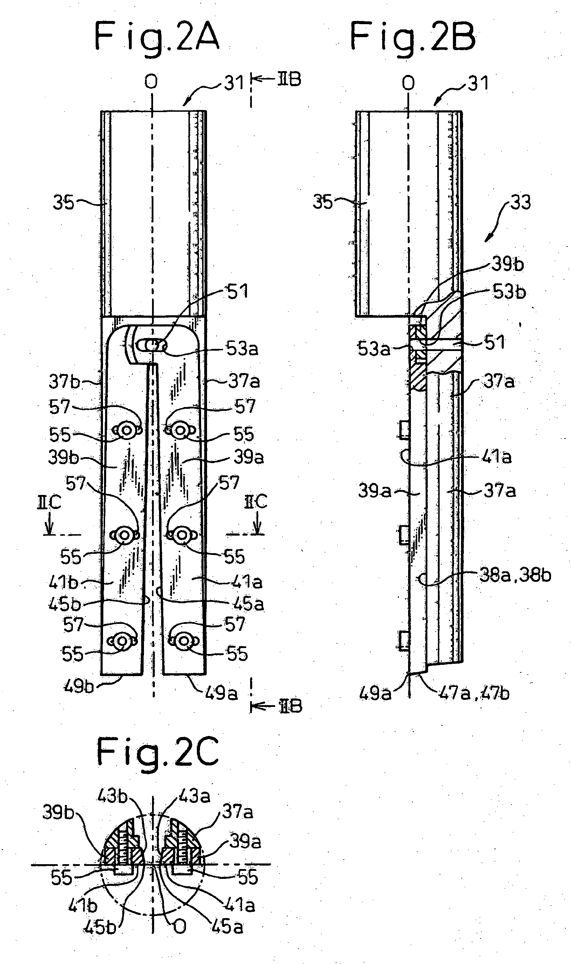

Next, a cutting tool apparatus according to a second embodiment of the present invention will be described with reference to Figs. 2A to 2C. In Figs. 2A to 2C, the cutting tool 31 according to the second embodiment includes a cylindrical shank portion 35, and a holder 33 having a pair of arms 37a, 37b provided on axially forward side of the shank portion 35, i.e. on the lower side of the shank portion 35 in Figs. 2A and 2B. The arms 37a, 37b are formed with blade mounting surfaces 38a, 38b, respectively, for mounting thereon blades 39a, 39b forming the cutting portions. The blades 39a, 39b are in turn formed with a plurality of slots 57 extending substantially transversely. The blades 39a, 39b are fixed on the arms 37a, 37b by screwing fixing bolts 55 into the internal screws formed at the corresponding portions of the arms 37a, 37b. Thus, the blades 39a, 39b are coupled to the shank portion 35 through the arms 37a, 37b.

The blades 39a, 39b have rake faces 41a, 41b, first flanks 43a, 43b and second flanks 47a, 47b similar to those of the cutting tool 11 according to the first embodiment. The rake faces 41a, 41b and the first flanks 43a, 43b make up first cutting edges 45a, 45b. The rake faces 41a, 41b and the second flanks 47a, 47b make up second cutting edges 49a, 49b. The second cutting edges 49a, 49b extend substantially transversely with respect to the center axis O as viewed from the front side of the cutting tool 31. The first cutting edges 45a, 45b, like in the first embodiment, extend linearly and in parallel to each other or extend linearly or curvedly in such a manner as to converge from the forward end toward the base end along the center axis O. The first cutting edges 45a, 45b are mounted in a fork-shape in opposed relation to each other.

In this embodiment, as described above, the blades 39a, 39b are mounted removably on the holder 33, and therefore both the first cutting edges 45a, 45b and the second cutting edges 49a, 49b can be easily re-ground. In view of the fact that bolt holes 57 are formed as slots extending substantially transversely of the blades 39a, 39b, the width and angle between the first cutting edges 45a, 45b can be adjusted. Specifically, the shape of the cutting edges 45a, 45b can be adjusted in accordance with the thickness and gradient of the rib portion. Incidentally, the operating of cutting the workpiece W by means of the cutting tool 31 according to the second embodiment is substantially same as in first embodiment and therefore is not be described in detail.

Further, a pin 51 is fixed at a portion adjacent to the base end portion or the shank portion 35 of the arms 37a, 37b, and slots 53a, 53b extending substantially transversely of the blades 39a, 39b are formed, as pin holes, at the base end portion of the arms 37a, 37b. The engagement between the pin 51 and the slots 53a, 53b facilitates the positioning of the blades 39a, 39b with respect to the arms 37a, 37b. In the mounting of the blades 39a, 39b, a positioning member (not shown) is arranged as required between the blades 39a, 39b, thereby further facilitating the positioning of the blades 39a, 39b with respect to the arms 37a, 37b. In the case where the blades 39a, 39b and the blade mounting surfaces 38a, 38b are formed such that the rake faces 41 a, 41 b extend along the center axis O of the cutting tool 31 or the rake faces 41a, 41b contain the center axis O, the programming for C-axis controlling of the spindle 11 can be facilitated.

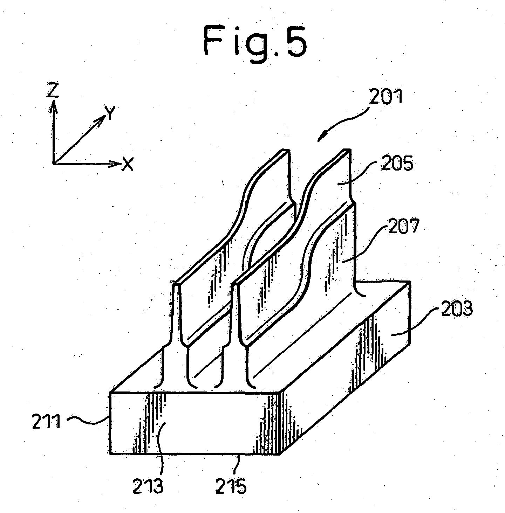

Next, with reference to Fig. 5, a rib electrode for electric discharge machining will be described. The rib electrode for electric discharge machining 201 is configured of a base portion 203 and rib portions 205 formed integrally with each other. Each of the rib portions 205 has a reinforcing portion 207 at the base thereof adjacent to the base portion 203. The rib portions 205 are formed to extend in parallel or tapered toward the forward end in a direction of the thickness thereof, and to extend linearly or curvedly in a direction of the length thereof. The two rib portions 205 of the rib electrode shown in Fig. 5 are erected in parallel to each other, and have the height changing in Z-axis direction with respect to the Y-axis position.

The base portion 203 has an X-axis reference surface 211, a Y-axis reference surface 213 and a Z-axis reference surface 215. The reference surfaces 211, 213, 215 are machined in advance on an electrode material. During the machining of the rib portions 205, with reference to the reference surfaces 211, 213, 215, the rib portions 205 are machined roughly by means of a rotary cutting tool such as a ball mill or a ball-end mill, and then finish-machined by means of the cutting tool apparatus according to the present invention. For the rib electrode 201 shown in Fig. 5, this cutting operation is performed by moving the cutting tool in the direction along Y-axis, i.e. along the machining path from the near side to the far side, while controlling the height in the direction along Z-axis.

Although the preferred embodiments have been described above, it would be apparent to those skilled in the art that the present invention is not limited to the aforementioned embodiments and various changes and modifications can be made.

In the embodiments described above, the table 107 of the cutting apparatus 101 is adapted to be able to move in the X-axis and Y-axis directions in a horizontal plane. However, the present invention is not limited to this configuration, but the table 107 may be adapted tobe able to move in one of X-axis and Y-axis directions and the column 103 may be adapted to be able to move in the other direction. Also, in the cutting apparatus 101 according to the embodiments described above, the workpiece fixed on the table 107 and the cutting tool mounted at the forward end of the spindle 111 can be moved relative to each other in the three orthogonal directions and C-axis direction about the spindle 111. However, the present invention is not limited to these embodiments. In the cutting apparatus 101, the workpiece fixed on the table 107 and the cutting tool mounted at the forward end of the spindle 111 may be moved relative to each other at least in the Z-axis direction parallel to the spindle 111, the C-axis direction about the Z-axis and one of the X-axis and Y-axis directions. In this case, the cutting apparatus 101 can machine a thin tabular rib portion R extending along a straight line as shown in Figs. 1A to C. Further, the Z-axis of the machine tool 101 may be not vertical as shown in Fig. 3, but the spindle 111 of the machine tool 101 may be configured to extend in a horizontal direction.

Also, in the foregoing description, the first cutting edges 23a, 23b and 45a, 45b extend in parallel to each other or are formed in such a manner as to progressively diverge from the base end side toward the forward end along the center axis O. However, the present invention is not limited to this configuration, and one of the first cutting edges 23a, 23b or 45a, 45b may be formed to extend in parallel to the center axis O and the other progressively extend away from the center axis O in the direction from the base end side toward the forward end. In other words, the first cutting edges 23a, 23b or 45a, 45b are not necessarily symmetric with respect to the center axis O. Also, the second cutting edges 25a, 25b and 49a, 49b are not necessarily symmetric with respect to the center axis O, and may be formed to conform to the required shape of the workpiece W, especially to the shape of the upper surface of the base portion B. The intersection between the first cutting edges 23a, 23b or 45a, 45b and the second cutting edges 25a, 25b or 49a, 49b may be chamfered or formed in an arc shape having a predetermined radius.

In the embodiments described above, the workpiece W has a rib portion R protected in form of a tabular wall from the base portion B. However, the present invention is not limited to this configuration, and the rib portion R may have any of various forms. In the workpiece W shown in Fig. 4, for example, the rib portion R projected from the base portion B is curved in an S-shape. The height of the rib portion 205 of the rib electrode 201 shown in Fig. 5 is changed in the Z-axis direction with respect to the position in the Y-axis direction. The rib portion R of this shape can be machined by controlling the C- and Z-axes of the cutting apparatus 101. Incidentally, the material of the workpiece W may be any of graphite, copper, aluminum, cast iron and steel.

## Claims

1. A method for cutting a rib portion (R) of a workpiece, **characterised in that** it comprises steps of:
determining a shape of a cutting edge of a cutting tool (11) so as to be of a shape corresponding to a cross section of a rib portion (R) to be machined;
providing said cutting tool (11) for machining said rib portion (R), the cutting tool (11) including a shank portion (13), fork-shaped arms (15a, 15b) formed at axially the front of the shank portion (13) so as to present an axially extending slit (27) between said arms (15a, 15b), and a two-pronged cutting edge formed along the inner edges of said fork-shaped arms (15a, 15b) such that the interval, angle and shape of said cutting edge conform to the sides of the cross section of said rib portion (R) to be machined;
mounting said cutting tool (11) on a spindle (111) of a machine tool (101); and
engaging said cutting tool (11) with both side surfaces of said rib portion (R) to be machined; and
moving said cutting tool (11) relative to said workpiece along a machining path extending in a longitudinal direction of said rib portion (R) to be machined to thereby cut said rib portion (R) of said workpiece to into a desired shape.

2. The method according to claim 1, wherein when moving said cutting tool (11) relative to said workpiece along a machining path extending in a longitudinal direction of said rib portion (R) to be machined, controlling a rotational angle of said spindle (111) is controlled such that the front side of said cutting edge of said cutting tool (11) is always maintained at right angle to the forward direction of the machining path thereby said rib portion (R) is machined.

3. A cutting toot apparatus mounted on a machine tool (101) for cutting a rib portion (R) of a workpiece, said cutting tool apparatus **characterised by**:
a shank portion (13) adapted to be mounted on said machine tool (101);
a cutting portion (15) located axially in front of said shank portion (13);
said cutting portion (15) comprising:
fork-shaped arms (15a, 15b) formed at axially the front of said shank so as to present an axially extending slit (27) disposed between the arms (15a, 15b); and
a two-pronged cutting edge extending in a shape corresponding to a cross section of said rib portion (R) to be machined said two-pronged cutting edge being formed along the inner edges of said fork-shaped arms (15a, 15b) such that the interval, angle and shape of said cutting edge conform to the sides of the cross section of said rib portion (R) to be machined.

4. The cutting tool apparatus according to claim 3, wherein said two-pronged cutting edge comprises blades mounted on fork-shaped arms (15a, 15b) such that an interval and/or angle of said cutting edge can be adjusted in accordance with a cross section of said rib portion (R) to be machined.

5. A cutting apparatus for cutting a rib portion (R) of a workpiece comprising:
a cutting tool apparatus according to claim 3;
a spindle (111) for mounting thereon said cutting tool apparatus;
a table (107) for fixing said workpiece thereon; and
a feed unit for moving said spindle (111) and said table relative to each other,
wherein said two-pronged cutting edge is engaged with both side surfaces of said rib portion (R) to be machined, and said cutting tool apparatus is moved relative to said workpiece along a machining path extending in a longitudinal direction of said rib portion (R) to thereby cut said rib portion (R).

6. The cutting apparatus according to claim 5, wherein a rotational angle of said spindle (111) is controlled such that the front side of said cutting edge of said cutting tool (11) is always maintained at right angle to the forward direction of the machining path to thereby cut said rib portion (R).

## Patentansprüche

1. Verfahren zum Schneiden eines Rippenbereichs (R) eines Werkstücks, **dadurch gekennzeichnet, dass** es die Schritte umfasst:
Bestimmen der Form einer Schnittkante eines Schneidwerkzeugs (11) um in einer Form entsprechend eines Querschnittbereichs eines zu bearbeitenden Rippen-Teils (R) zu sein;
Bereitstellen des Schneid-Werkzeugs (11) zur Bearbeitung des Rippen-Teils (R), worin das Schneid-Werkzeug (11) umfasst, einen Schenkel-Bereich (13), Gabel-förmige Arme (15a, 15b), die axial vorne an dem Schenkelbereich (13) ausgebildet sind, um einen axial sich erstreckenden Schlitz (27) zwischen den Armen (15a, 15b) bereitzustellen, und eine zwei-zackige Schnittkante, die entlang der Innenkanten der Gabel-förmigen Arme (15a, 15b) ausgebildet sind, so dass das Intervall, der Winkel und die Form der Schnittkante mit den Seiten des Querschnitts des zu bearbeitenden Rippen-Teils (R) übereinstimmt;
Befestigen des Schneid-Werkzeugs (11) auf einer Spindel (111) eines Maschinenwerkzeugs (101); und
in Eingriff bringen des Schneid-Werkzeugs (11) mit beiden Seitenflächen des zu bearbeitenden Rippen-Teils (R); und
Bewegen des Schneid-Werkzeugs (11) relativ zu dem Werkstück entlang eines Bearbeitungswegs, der sich in Längsrichtung des zu bearbeitenden Rippen-Teils (R) erstreckt, um dadurch das Rippen-Teil (R) des Werkstücks in eine gewünschte Form zu schneiden.

2. Verfahren nach Anspruch 1, wobei beim Bewegen des Schneid-Werkzeugs (11) relativ zu dem Werkstück entlang des Bearbeitungsweges, der sich in einer Längsrichtung des zu bearbeitenden Rippen-Teils (R) erstreckt, die Steuerung eines Drehwinkels der Spindel (111) derart durchgeführt wird, dass die Vorderseite der Schnittkante des Schneid-Werkzeugs (11) immer im rechten Winkel zu der Vorwärtsrichtung des Bearbeitungswegs gehalten wird, wodurch das Rippen-Teil (R) bearbeitet wird.

3. Auf einem Maschinenwerkzeug (101) befestigte Schneidewerkzeug-Vorrichtung zum Schneiden eines Rippen-Teils (R) eines Werkstücks, wobei die Schneid-Werkzeug-Vorrichtung **gekennzeichnet ist durch**:
einen Schenkel-Bereich (13), der angepasst ist auf dem Maschinenwerkzeug (101) befestigt zu werden;
einen Schneidebereich (15, der axial vorne an dem Schenkel-Bereich (13) angeordnet ist;
worin der Schneide-Bereich (15) umfasst :
Gabel-ähnliche Arme (15a, 15b), die axial vorne an dem Schenkel ausgebildet sind, um einen axial sich erstreckenden Schlitz (27) zu zeigen, der zwischen den Armen (15a, 15b) angeordnet ist; und
ein zwei-zackige Schneid-Kante, die sich in einer Form entsprechend einem Querschnitt des zu bearbeitenden Rippen-Teils (R) erstreckt;
worin die zwei-zackige Schneidkante entlang der Innenkanten der Gabel-förmigen Arme (15a, 15b) ausgebildet ist, so dass das Intervall, der Winkel und die Form der Schneidkante den Seiten des zu bearbeitenden Rippen-Teils (R) entspricht.

4. Schneidewerkzeug-Vorrichtung nach Anspruch 3, worin die zwei-zackige Schneidkante Klingen umfasst, die auf den Gabel-förmigen Armen (15a, 15b) befestigt sind, so dass ein Intervall und/oder Winkel der Schneidkante gemäß einem Querschnitt des zu bearbeitenden Rippen-Teil (R) eingestellt werden kann.

5. Schneide-Vorrichtung zum Schneiden eines Rippen-Teils (R) eines Werkstücks welches umfasst:
eine Schneidewerkzeug-Vorrichtung nach Anspruch 3;
eine Spindel (111) zur Befestigung einer Schneid-Werkzeug-Vorrichtung gemäß Anspruch 3 darauf;
ein Tisch (107) zur Befestigung des Werkstücks darauf; und
eine Beschickungseinheit zur Bewegung der Spindel (111) und des Tisches relativ zueinander,
worin die zwei-zackige Schneidkante mit beiden Seitenflächen des zu bearbeitenden Rippen-Teils (R) in Eingriff gebracht wird, und worin die Schneid-Werkzeug-Vorrichtung relativ zu dem Werkstück entlang eines Bearbeitungsweges bewegt wird, der sich in Längsrichtung des Rippen-Teils (R) erstreckt, um dadurch das Rippen-Teil (R) zu schneiden.

6. Schneidewerkzeug-Vorrichtung nach Anspruch 5, worin ein Drehwinkel der Spindel (111) gesteuert wird, so dass die vordere Seite der Schneidkante des Schneid-Werkzeug (11) immer in einem rechten Winkle zu der Vorwärtsrichtung des Bearbeitungsweges gehalten wird, wodurch das Rippen-Teil (R) geschnitten wird.

## Revendications

1. Procédé de coupe d'une partie nervurée (R) d'une pièce, **caractérisée en ce qu'**il comprend les étapes suivantes :
détermination d'une forme d'une arête de coupe d'un outil de coupe (11) de manière à ce qu'elle ait une forme correspondant à une section transversale d'une partie nervurée (R) à usiner ;
prévision dudit outil de coupe (11) pour usiner ladite section nervurée (R), l'outil de coupe (11) comprenant une partie tige (13), des bras en forme de fourche (15a, 15b) formés axialement à l'avant de 1a partie tige (13) de manière à présenter une fente s'étendant axialement (27) entre lesdits bras (15a, 15b), et une arête de coupe à deux crochets formée le long des bords internes desdits bras en forme de fourches (15a, 15b) de manière à ce que l'intervalle, l'angle et la forme de ladite arête de coupe correspondent aux côtés de la section transversale de ladite partie nervurée (R) à usiner ;
montage dudit outil de coupe (11) sur une broche (111) d'une machine-outil (101) ; et
engagement dudit outil de coupe (11) dans les deux surfaces latérales de ladite partie nervurée (R) à usiner ; et
déplacement dudit outil de coupe (11) par rapport à ladite pièce le long d'un parcours d'usinage s'étendant dans un sens longitudinal de ladite partie nervurée (R) à usiner afin de couper ainsi ladite partie nervurée (R) à une forme désirée.

2. Procédés selon la revendication 1, dans lequel, quand on déplace ledit outil de coupe (11) par rapport à ladite pièce le long d'un parcours d'usinage s'étendant dans un sens longitudinal de ladite partie nervurée (R), la commande d'un angle de rotation de ladite broche (111) est contrôlée de manière à ce que la face avant de ladite arête de coupe dudit outil de coupe (11) soit toujours maintenue à angle droit par rapport au sens avant du parcours d'usinage, ladite partie nervurée (R) étant ainsi usinée.

3. Appareillage d'outil de coupe monté sur une machine-outil (101) pour couper une partie nervurée (R) d'une pièce, ledit appareillage d'outil de coupe étant **caractérisé par** :
une partie tige (13) apte à être montée sur ladite machine-outil (101) ;
une section de coupe (15) située axialement à l'avant de ladite partie tige (13) ;
ladite section de coupe (15) comprenant :
des bras en forme de fourche (15a, 15b) formés axialement à l'avant de ladite tige de manière à présenter une fente s'étendant axialement (27) disposée entre les bras (15a, 15b) ; et
une arête de coupe à deux crochets s'étendant avec une forme correspondant à une section transversale de ladite partie nervurée (R) à usiner,
ladite arête de coupe à deux crochets étant formée le long des bords internes desdits bras en forme de fourches (15a, 15b) de manière à ce que l'intervalle, l'angle et la forme de ladite arête de coupe correspondent aux faces de la section transversale de ladite partie nervurée (R) à usiner.

4. Appareillage d'outil de coupe selon la revendication 3, dans lequel ladite annexe de coupe à deux crochets comprend des lames montées sur des bras en forme de fourches (15a, 15b) de manière à ce qu'un intervalle et/ou angle de ladite arête bord de coupe puisse être ajusté en fonction d'une section transversale de ladite partie nervurée (R) à usiner.

5. Appareillage de coupe pour couper une section nervurée (R) d'une pièce, comprenant :
un appareillage d'outil de coupe selon la revendication 3 ;
une broche (111) servant à y monter ledit appareillage d'outil de coupe ;
une table (107) pour y fixer ladite pièce ; et
une unité d'alimentation pour déplacer ladite broche (111) et ladite table l'une par rapport à l'autre,
ladite arête de coupe à deux crochets étant engagée dans lesdites surfaces latérales de ladite partie nervurée (R) à usiner et ledit appareillage d'outil de coupe étant déplacé par rapport à ladite pièce le long d'un parcours d'usinage s'étendant dans un sens longitudinal de ladite partie nervurée (R) afin de couper ainsi ladite partie nervurée (R).

6. Appareillage de coupe selon la revendication 5, par lequel un angle de rotation de ladite broche (111) est contrôlé de manière à ce que la face avant de ladite arête de coupe dudit outil de coupe (11) soit toujours maintenue à angle droit par rapport au sens avant du parcours d'usinage afin de couper ainsi ladite partie nervurée (R).
